# EUROPÄISCHE PATENTSCHRIFT

(11) **EP 1 044 338 B1**
(45) Veröffentlichungstag und Bekanntmachung des Hinweises auf die Patenterteilung: **03.11.2004**
(21) Anmeldenummer: 99953913.3
(22) Anmeldetag: 21.10.1999
(51) Int. Cl.: F16D 59/02, F16D 55/28

(54) **ELEKTROMAGNETISCH LÜFTBARE FEDERKRAFTBREMSE MIT ANKERSCHEIBE**
ELECTROMAGNETICALLY RELEASED SPRING-APPLIED BRAKE WITH ANCHOR PLATE
FREIN COMMANDE PAR RESSORT A DEBLOCAGE ELECTROMAGNETIQUE AVEC UNE RONDELLE D'INDUIT

(30) Priorität: 05.11.1998 DE 19851032
(43) Veröffentlichungstag der Anmeldung: 18.10.2000
(73) Patentinhaber: Lenze Drive Systems GmbH, 31855 Aerzen (DE)
(72) Erfinder: BRENDLER, Matthias, D-31785 Hameln (DE); QUADFASEL, Winfried, D-32699 Extertal (DE)
(74) Vertreter: Elbertzhagen, Otto, Dipl.-Ing.
(86) Internationale Anmeldenummer: PCT/EP1999/008002
(87) Internationale Veröffentlichungsnummer: WO 2000/028232

(56) Entgegenhaltungen:
- DE-A- 2 404 473
- DE-A- 4 109 740
- DE-U- 8 519 223

## Beschreibung

### TECHNISCHES GEBIET

Die Erfindung bezieht sich auf eine elektromagnetisch lüftbare Federkraftbremse der im Gattungsbegriff des Patentanspruchs 1 näher bezeichneten Art.

### STAND DER TECHNIK

Eine solche Federkraftbremse ist aus der deutschen Offenlegungsschrift DE 41 09 740 A1 bekannt. Es handelt sich um eine Bremse, die an Antrieben von Aufzugsanlagen eingesetzt werden. Für diesen Anwendungsfall bestehen besondere Sicherheitsanforderungen, nach denen die Bremse auch dann noch funktionsfähig sein muß, wenn die beiden Ankerscheiben relativ zueinander oder wenn die hintere, dem Magnetteil zugewandte Ankerscheibe gegenüber dem Magnetteil in ihrer axialen Beweglichkeit blockiert ist.

Bei einer Bremse der gattungsbildenden Art, bei der im Störfalle die axiale Verschiebbarkeit der vorderen Ankerscheibe gegenüber der hinteren Ankerscheibe blockiert ist, verhalten sich beide Ankerscheiben wie eine einteilige Ankerscheibe, es steht nach wie vor die volle Bremswirkung im Bremsfalle zur Verfügung. Ist bei einer solchen Bremse die hintere Ankerscheibe am Magnetteil blockiert, steht über die nach wie vor noch axial verschiebbare vordere Ankerscheibe ein erheblicher Teil der Bremskraft für den Bremsvorgang zur Verfügung.

Für den gleichen Anwendungsfall gibt es Federkraftbremsen anderer Bauart, die zwei Ankerscheiben haben, die in radialer Richtung voneinander getrennt angeordnet sind. Eine solche Federkraftbremse ist aus der deutschen Offenlegungsschrift DT 24 04 473 A1 bekannt. Der mechanische Teil einer solchen Federkraftbremse ist somit in zwei Funktionseinheiten aufgeteilt, die je für sich den Bremsrotor auch dann noch beaufschlagen können, wenn der jeweils andere Funktionsteil blokkiert sein könnte. Einerseits beaufschlagen die beiden Ankerscheiben den Bremsrotor in der Bremslage gemeinsam. Andererseits sind den beiden Ankerscheiben eigene Druckfedern zugeordnet, die am Magnetteil abgestützt sind. Am Bremsrotor markieren sich entsprechend den beiden vorhandenen Ankerscheiben zwei Bremsspuren, an denen sich auch bei gleich verteilter Bremskraft auf die beiden Ankerscheiben unterschiedliche Verschleißzustände und ein dazwischen liegender Grat ergeben. Dies führt auf Dauer zu Unregelmäßigkeiten in der Bremswirkung beider Ankerscheiben und kann Störfälle nach sich ziehen.

Bei einer gattungsgemäßen Federkraftbemse entfällt dieser Nachteil, weil ausschließlich die vordere Ankerscheibe den Bremsrotor in der Bremslage beaufschlagt. Im Hinblick auf die Funktionstüchtigkeit bei den gestellten Sicherheitsanforderungen hat die Federkraftbremse in der bekannten Ausführung jedoch konstruktive Merkmale, die eine Anordnung der Druckfedern im Hinblick auf einen größeren Unterschied in der Verteilung der Bremskraft auf die beiden Ankerscheiben und einer optimalen Führung des magnetischen Flusses des Magnetteils entgegenstehen. Was den letzteren Punkt betrifft, gibt es zwar für andere Zwecke Zweistufenbremsen, wie sie aus dem deutschen Gebrauchsmuster DE 85 19 223 U1 bekannt sind. Dort steht jedoch die Variierung der Bremskraft an unterschiedliche Lastfälle im Vordergrund.

### DARSTELLUNG DER ERFINDUNG

Der Erfindung liegt deshalb die Aufgabe zugrunde, eine Federkraftbremse der gattungsgemäßen Art zu schaffen, die bezüglich einer unterschiedlichen Verteilung der Bremskraft auf die beiden Ankerscheiben eine größere Variabilität ermöglicht und besonders funktionssicher ist.

Diese Aufgabe wird durch die kennzeichnenden Merkmale des Patentanspruchs 1 gelöst.

### WEGE ZUR AUSFÜHRUNG DER ERFINDUNG

Für die Erfindung ist wesentlich, daß zwar die Druckfedern des Innenpols nur auf die vordere Ankerscheibe wirken, aber die Anpreßkraft der Druckfedern des Außenpoles über die hintere Ankerscheibe auf die vordere Ankerscheibe wirkt. Die Dicken der beiden Ankerscheiben können derart aufeinander abgestimmt werden, daß die vordere Ankerscheibe nicht ohne die hintere von dem Reibbelag getrennt werden kann. Andererseits kann die hintere Ankerscheibe nicht ohne die vordere Ankerscheibe vom Magnetteil abfallen. Die Trennfuge der beiden Ankerscheiben liegt nicht im Bereich der Reibfläche des Bremsrotors, denn dieser wird ausschließlich von der vorderen Ankerscheibe beaufschlagt. Insgesamt ergibt sich dadurch bei der neuen Federkraftbremse ein Schaltverhalten, welches dem einer Bremse mit einer einteiligen Ankerscheibe entspricht. Der im Bremsfall an der vorderen Ankerscheibe erzeugte Anteil des Bremsmomentes wird über die hintere Ankerscheibe an den Haltegliedern am Magnetteil abgestützt. Im übrigen kann zusätzlich die vordere Ankerscheibe mit Bohrungen versehen sein, mit der sie auf die Halteglieder am Magnetteil ebenfalls aufgesteckt ist, um die vordere Ankerscheibe zusätzlich gegen ein Verdrehen zu sichern. Denn konstruktionsbedingt kommt im normalen, also ungestörten Schaltbetrieb eine axiale Relativbewegung zwischen der vorderen Ankerscheibe und der hinteren Ankerscheibe beim Abfallen vom Magnetteil nicht zustande. Insoweit ist ein Verklemmen allein der vorderen Ankerscheibe bei gleichzeitiger Verschiebung der hinteren Ankerscheibe prinzipiell nicht möglich.

Im Störfalle, bei welchem die hintere Ankerscheibe auf den Haltegliedern am Magnetteil blockiert ist, ist noch nach wie vor die vordere Ankerscheibe gegenüber der hinteren Ankerscheibe axial verschieblich und kann infolge der auf sie wirkenden Druckfedern auf den Bremsrotor ein Bremsmoment ausüben. Durch eine geeignete Verteilung der Federkräfte kann eine ungleiche Aufteilung der Bremsmomente auf die vordere Ankerscheibe und auf die hintere Ankerscheibe erzielt werden. So wird zweckmäßig der größere Anteil der Federkraft der vorderen Ankerscheibe zugeordnet, damit bei einem Verklemmen der hinteren Ankerscheibe mehr als 50 % des Bremsmomentes erhalten bleibt. Gegenüber der bisher üblichen Aufteilung der Bremskräfte bei den sogenannten Zweikreis-Federkraftbremsen von jeweils 50 % je Bremskreis kann auf diese Weise eine Reduzierung der Bremsengröße erlangt werden. Liegt ein Störfall vor, bei dem sich die vordere Ankerscheibe gegenüber der hinteren Ankerscheibe verklemmt, dann sind nach wie vor beide Bremskreise der neuen Federkraftbremse mit 100 % des Bremsmomentes wirksam, weil beide Ankerscheiben sich wie eine einteilige Ankerscheibe verhalten.

Ein weiterer Vorteil der neuen Federkraftbremse liegt in der den Bremsrotor beaufschlagenden, ungeteilten Reibfläche der vorderen Ankerscheibe. Hierdurch wird ein geringerer Verschleiß des Reibbelages auf der Ankerscheibenseite des Bremsrotors erreicht. Zudem kann sich auf diesem Reibbelag kein Absatz bilden, wie er zwischen den Bremsspuren einer herkömmlichen Federkraftbremse mit zwei den Bremsrotor beaufschlagenden Ankerscheiben auftritt.

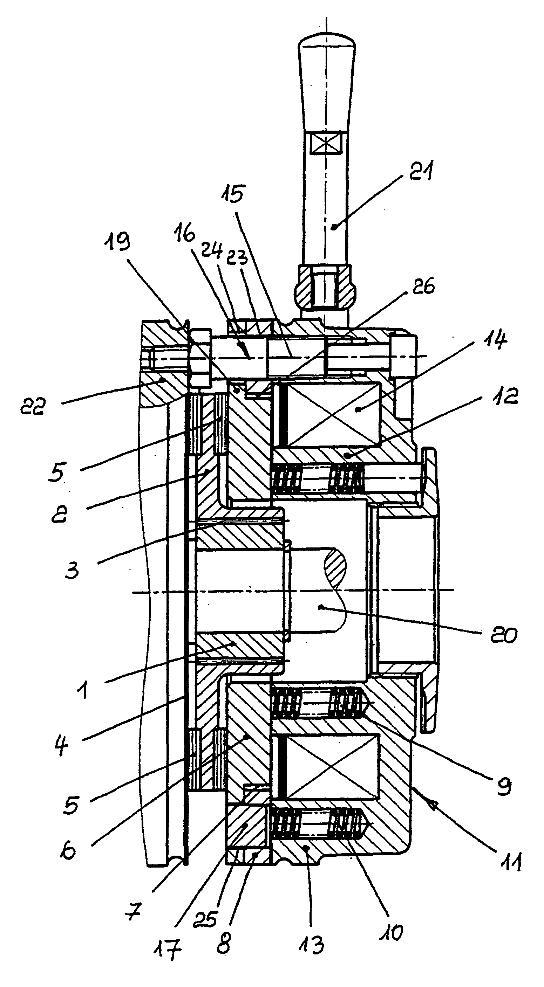

Die Erfindung wird nachfolgend anhand der Zeichnung an einem Ausführungsbeispiel noch näher erläutert. Die Zeichnung zeigt eine elektromagnetisch lüftbare Federkraftbremse im Schnitt, in unterschiedlichen Radialebenen unterhalb und oberhalb der Achslinie.

Die Federkraftbremse dient zum Abbremsen einer Welle 20, bei der es sich inbesondere um die Welle des Motors für einen Aufzugantrieb handelt. Auf der Welle 20 sitzt drehfest eine Nabe 1, auf der wiederum drehfest jedoch in Achsrichtung verschieblich ein Bremsrotor 2 angeordnet ist. Entsprechend sind der Bremsrotor 2 und die Nabe 1 mittels einer in Achsrichtung verlaufenden Verzahnung 3 miteinander verbunden. In der Bremslage wird der Bremsrotor gegen ein gestellfestes Widerlager 4 gepreßt, bei dem es sich hier um das Lagerschild des für den Aufzugantrieb vorgesehenen Motors handelt, an dem die Federkraftbremse angeflanscht ist. An seinen beiden voneinander abliegenden Stirnseiten hat der Bremsrotor 2 Reibbeläge 5, um die Verzögerungswirkung zu begünstigen.

In der Bremslage wird der Bremsrotor 2 von einer vorderen Ankerscheibe 6 einer zweigeteilten Ankerscheibe beaufschlagt, wobei die Ankerscheibe insgesamt koaxial mit dem Bremsrotor 2 verschieblich ist. Der zweite Teil der Ankerscheibe wird durch eine hintere Ankerscheibe 8 gebildet, die in einer randlichen sowie randoffenen Aussparung 7 in Gestalt einer Ausdrehung der vorderen Ankerscheibe 6 einliegt. Die Tiefe der Aussparung 7 in Achsrichtung ist gleich der Dicke der hinteren Ankerscheibe 8, und außerdem haben die vordere Ankerscheibe 6 und die hintere Ankerscheibe 8 den gleichen Außendurchmesser, womit bei Anlage der vorderen Ankerscheibe 6 und der hinteren Ankerscheibe 8 aneinander ein Verbund erreicht ist, welcher der einer einteiligen Ankerscheibe entspricht. Im Querschnitt ist die hintere Ankerscheibe 8, welche ringförmig ist, rechteckig ausgeführt, entsprechend ist daran die Aussparung 7 der vorderen Ankerscheibe 6 so angepaßt, daß die in der Aussparung 7 einliegende hintere Ankerscheibe 8 und die vordere Ankerscheibe 6 sich zu der Form einer einteiligen zylindrischen Ankerscheibe ergänzen. Zwischen der inneren Umfangsfläche der hinteren Ankerscheibe 6 und der äußeren Umfangsfläche des nabenförmigen Teils der vorderen Ankerscheibe 6, der durch die hintere Ankerscheibe 8 hindurchragt, besteht ein Luftspalt 26, um eine Klemmen der hinteren Ankerscheibe 8 auf der vorderen Ankerscheibe 6 zu unterbinden. Die radiale Luft, die zwischen der vorderen Ankerscheibe 6 im Bereich der Aussparung 7 zu der hinteren Ankerscheibe 8 besteht, ist in der Zeichnung übertrieben dargestellt.

Wichtig ist, daß der Bremsrotor 2 ausschließlich von der vorderen Ankerscheibe 6 in der Bremslage beaufschlagt wird, während die zum Bremsrotor 2 hinliegende Bremsfläche allein schon einen Durchmesser hat, der etwas größer als der des Bremsrotors 2 ist.

Die Bremskraft, mit der sich die vordere Ankerscheibe 6 in der Bremslage am Bremsrotor 2 abstützt, wird von Druckfedern 9 und 10 aufgebracht, von denen die axial nach innen hin liegenden Druckfedern 9 nur an der vorderen Ankerscheibe 6 und die radial weiter nach außen hin angeordneten Druckfedern 10 an der hinteren Ankerscheibe 8 anliegen. Es handelt sich jeweils um mehrere Druckfedern 9, 10, die jeweils in Umfangsrichtung der Bremse achsparallel angeordnet sind, wobei ersichtlich ist, daß die äußeren Druckfedern 10, welche die hintere, ringförmige Ankerscheibe 8 beaufschlagen, zugleich auch auf die vordere Ankerscheibe 6 wirken.

Die Ankerscheiben 6, 8 sind Teil eines magnetischen Kreises, der sich über ein Magnetteil 11 schließt. Das Magnetteil 11 hat einen Innenpol 12 und koaxial dazu einen Außenpol 13, und zwischen diesen Polen 12 und 13 ist eine Erregerspule 14 angeordnet, durch die zwecks Aktivierung des magnetischen Kreises ein Gleichstrom hindurchgeschickt wird. Die beiden Pole 12 und 13 des Magnetteils 1 haben an ihren freien Stirnseiten Polflächen, denen entsprechende Gegenpolflächen der Ankerscheiben 6 und 8 gegenüberliegen, wobei sich zwischen diesen Polflächen und den Gegenpolflächen bei nicht erregtem Magnetteil 6 ein Luftspalt befindet. Bei Erregung des Magnetteils 11 werden entgegen der Kraft der Druckfedern 9 und 10 die beiden Ankerscheiben 6 und 8 gegen das Magnetteil 11 hin angezogen, wobei sich der Luftspalt schließt. Zugleich hebt sich hierbei die vordere Ankerscheibe 6 vom Bremsrotor 2 ab, wodurch dieser freigegeben, also nicht abgebremst wird.

Die besondere Bauform der Bremse mit einem Außenpol 13 und einem dazu koaxialen Innenpol 12 des Magnetteils 11 erlaubt es, die inneren Druckfedern 9 im Innenpol 12 und die äußeren Druckfedern 10 im Außenpol 13 anzuordnen. Ferner sind im Außenpol in Umfangsrichtung verteilt drei oder mehrere achsparallele Halteglieder 15 angeordnet, die über die Polfläche des Außenpols 13 zur Halterung der vorderen Ankerscheibe 6 und der hinteren Ankerscheibe 8 vorstehen. Zweckmäßig handelt es sich bei diesen Haltegliedern 15 um Bolzen oder Hülsenschrauben, über die zugleich die Befestigung der Federkraftbremse am Motorschild 22 erfolgt. Bei der dargestellten Ausführung als Hülsenschrauben kann hierüber zugleich die Justage des Luftspaltes für die beiden Ankerscheiben 6 und 8 vorgenommen werden. Die Halteglieder 15 weisen Zylnderflächen 16 auf, auf denen die hintere Ankerscheibe 8 exakt geführt ist, die entsprechende Zylinderöffnungen 23 hat. Damit besteht sowohl eine axiale Führung als auch eine Verdrehsicherung der hinteren Ankerscheibe 8 an den Haltegliedern 15. Die vordere Ankerscheibe 6 hat einen radial vorstehenden, die hintere Ankerscheibe 8 übergreifenden Randabschnitt 19, der ebenfalls mit Zylinderöffnungen 24 ausgestattet ist, die jedoch ein größeres Spiel gegenüber den Zylinderflächen 16 der Halteglieder 15 haben, was in der Zeichnung übertrieben wiedergegeben ist. Hiermit wird dann eine zusätzliche Drehsicherung der vorderen Ankerscheibe 6 an den Haltegliedern 15 erzielt, wenn durch einen Materialverschleiß zwischen den Zylinderöffnungen 23 der hinteren Ankerscheibe 8 und den Zylinderflächen 16 der Halteglieder 15 ein solch großes Spiel erreicht worden sein sollte, welches dem Spiel zwischen der vorderen Ankerscheibe 6 und den Haltegliedern 15 entspricht.

Eine exakte axiale Führung und Drehabstützung der vorderen Ankerscheibe 6 erfolgt an der hinteren Ankerscheibe 8 und dazu sind in die hintere Ankerscheibe 8 in Umfangsrichtung versetzt zu den Haltegliedern 15 Mitnehmer 17 eingesetzt, bei denen es sich um zumindest an der Außenseite zylindrische Körper handelt, wobei die Achse der Zylinderfläche dieser Körper wiederum parallel mit der Hauptachse der Bremse ist. Die vordere Ankerscheibe 6 hat entsprechende Zylinderöffnungen 25, welche die Mitnehmer 17 an der hinteren Ankerscheibe 8 übergreifen. Man erkennt, daß sich die vordere Ankerscheibe 6 nur unter Mitnahme der hinteren Ankerscheibe 8 vom Bremsrotor 2 lösen und andererseits die hintere Ankerscheibe 8 nur unter Mitnahme der vorderen Ankerscheibe 6 vom Magnetteil 11 abfallen kann. Dies entspricht dem normalen Schaltbetrieb der Federkraftbremse, in welchem sich die beiden Ankerscheiben 6 und 8 wie eine einstückige Ankerscheibe verhalten.

Tritt ein Fehlerfall auf, verklemmt sich entweder die hintere Ankerscheibe 8 auf den Haltegliedern 15 oder die vordere Ankerscheibe 6 auf den Mitnehmern 17 der hinteren Ankerscheibe 8. Im ersteren Fall bleibt die vordere Ankerscheibe 6 funktionsfähig, weil sie auf den Mitnehmern 17 gegenüber der hinteren Ankerscheibe 8 axial verschieblich bleibt und von den inneren Druckfedern 9 im Innenpol 12 des Magnetteils 11 noch nach wie vor gegen den Bremsrotor 2 in der Bremslage gepreßt werden kann. Vorzugsweise macht man die Bremskraft, die über die innenliegenden Druckfedern 9 aufgebracht wird, erheblich größer als die der allein die hintere Ankerscheibe 8 beaufschlagenden äußeren Druckfedern 10, damit in dem angenommenen Störfall noch ein ausreichend hohes Bremsmoment auf den Bremsrotor 2 ausgeübt werden kann. Im zweiten vorausgesetzten Störfall, bei welchem die vordere Ankerscheibe 6 gegenüber der hinteren Ankerscheibe 8 blockiert ist, ist nach wie vor die volle Bremskraft der inneren Druckfedern 9 und der äußeren Druckfedern 10 wirksam, weil sich dann beide Ankerscheiben 6 und 8 wie eine einteilige Ankerscheibe verhalten.

Damit vor allem bei einer elektrischen Störung, in der das Magnetteil 11 nicht erregt werden kann, die Bremse gelüftet, also der Bremsrotor 2 freigegeben werden kann, ist ferner noch ein Handhebel 21 vorgesehen, über den die Ankerscheiben 6 und 8 vom Bremsrotor 2 weg axial verschoben werden können.

## Patentansprüche

1. Elektromagnetisch lüftbare Federkraftbremse mit einem mit einer zu bremsenden Welle oder Wellennabe (1) drehfesten, jedoch darauf axial verschiebbaren Bremsrotor 2, der zwischen einem gestellfesten Widerlager (4) und zwei von mehreren Druckfedern (9, 10) in Richtung zum Bremsrotor (2) hin beaufschlagten, mit diesem koaxialen Ankerscheiben (6, 8) angeordnet ist, die sich in eine vordere, ausschließlich den Bremsrotor (2) in der Bremslage beaufschlagenden Ankerscheibe (6) sowie in eine hintere Ankerscheibe (8) an der vom Bremsrotor (2) abliegenden Seite der vorderen Ankerscheibe (6) gliedern, die ferner entgegen der Kraft der Druckfedern (9, 10) mit ihren vom Bremsrotor (2) abliegenden Seiten unter dessen Freigabe zu einem Magnetteil (11) mit einem mit den Ankerscheiben (6, 8) axialen Außenpol (13) sowie einem hierzu konzentrischen Innenpol (12) hin über einen Luftspalt hinweg anziehbar sind und von denen die vordere Ankerscheibe (6) drehfest sowie axial verschieblich an der hinteren Ankerscheibe (8) angeordnet ist,
**dadurch gekennzeichnet,**
**daß** jede der beiden Ankerscheiben (6, 8) mit einer entsprechenden Gegenpolfläche über den Luftspalt hinweg einer stirnseitigen Polfläche eines der beiden Pole (12, 13) des Magnetteils (11) gegenüberliegend angeordnet ist und die hintere Ankerscheibe (8) in Gestalt eines Ringes in einer Aussparung (7) der vorderen Ankerscheibe (6) einliegt, die in axialer Richtung eine Tiefe gleich der Dicke der hinteren Ankerscheibe (8) hat und die am äußeren Rand der vorderen Ankerscheibe (6) in radialer Richtung nach außen offen angeordnet ist, daß die hintere Ankerscheibe (8) auf achsparallel am Magnetteil (11) vorstehenden Haltegliedern (15) längs verschieblich sowie drehfest gehalten ist und daß die Druckfedern (9, 10) zu einem Teil im Innenpol (12) und zu einem weiteren Teil im Außenpol (13) des Magnetteils (11) angeordnet sind.

2. Federkraftbremse nach Anspruch 1,
**dadurch gekennzeichnet,**
**daß** die vordere Ankerscheibe (6) einen Durchmesser hat, der gleich groß oder größer als der Durchmesser des Bremsrotors (2) ist.

3. Federkraftbremse nach Anspruch 1 oder 2,
**dadurch gekennzeichnet,**
**daß** die ringförmige Ankerscheibe (8) im Querschnitt rechteckig oder quadratisch und daran der Umriß der Aussparung (7) der vorderen Ankerscheibe (6) angepaßt ist.

4. Federkraftbremse nach einem der Ansprüche 1 - 3,
**dadurch gekennzeichnet,**
**daß** die vordere Ankerscheibe (6) und die hintere Ankerscheibe (8) gleiche Außendurchmesser haben.

5. Federkraftbremse nach einem der Ansprüche 1 bis 4 ,
**dadurch gekennzeichnet,**
**daß** die vordere Ankerscheibe (6) mit ihrem die hintere Ankerscheibe (8) in radialer Richtung übergreifenden Randabschnitt (19) ebenfalls mit entsprechenden Öffnungen auf den Haltegliedern (15) am Magnetteil (11) angeordnet ist, jedoch gegenüber diesen Haltegliedern (15) ein größeres Spiel als die hintere Ankerscheibe (8) hat.

6. Federkraftbremse nach einem der Ansprüche 1 bis 5,
**dadurch gekennzeichnet,**
**daß** die Halteglieder (15) am Magnetteil (11) glatte Zylinderflächen (16) haben, auf denen zumindest die hintere Ankerscheibe (6) mit entsprechenden Zylinderlöchern angeordnet ist.

7. Federkraftbremse nach einem der Ansprüche 1 bis 6,
**dadurch gekennzeichnet,**
**daß** in eine der beiden Ankerscheibe (6, 8) achsparallel vorstehende Mitnehmer (17) eingelassen sind, auf denen die jeweils andere Ankerscheibe (8, 6) mit entsprechenden Führungslöchern axial verschieblich gelagert ist.

8. Federkraftbremse nach Anspruch 7,
**dadurch gekennzeichnet,**
**daß** die Mitnehmer (17) der betreffenden Ankerscheibe (6, 8) und entsprechend die Führungslöcher der anderen Anker scheibe (8, 6) zylindrisch sind.

9. Federkraftbremse nach einem der Ansprüche 1 bis 8,
**dadurch gekennzeichnet,**
**daß** das Kraftverhältnis der die vordere Ankerscheibe (6) beaufschlagenden Druckfedern (9) und der die hintere Ankerscheibe (8) beaufschlagenden Druckfedern (10) größer als 50:50 ist.

## Claims

1. Electromagnetically released spring-applied brake with a brake rotor (2) which is rotationally secured with but axially displaceable on a shaft or shaft hub (1) which is to be braked wherein the rotor is mounted between an abutment (4) fixed on a frame and two anchor plates (6,8) which are coaxial with and loaded by several compression springs (9,10) towards the brake rotor (2), wherein the anchor plates are divided into a front anchor plate (6) which solely biases the brake rotor (2) in the braking position, and a rear anchor plate (8) on the side of the front anchor plate (6) remote from the brake rotor (2), wherein the anchor plates furthermore can be attracted beyond an air gap against the force of the compression springs (9,10) with their sides remote from the brake rotor (2) with the release of same to a magnetic part (11) having an outer pole (13) axial with the anchor plates (6, 8) as well as an inner pole (12) concentric therewith and of which the front anchor plate (6) is mounted rotationally secured and axially displaceable on the rear anchor plate (8),
**characterised in that**
each of the two anchor plates (6, 8) is mounted with a corresponding counter pole face beyond the air gap opposite an end pole face of one of the two poles (12, 13) of the magnetic part (11) and the rear anchor plate (8) fits in the shape of a ring in a recess (7) in the front anchor plate (6) which in the axial direction has a depth equal to the thickness of the rear anchor plate (8) and which is arranged on the outer edge of the front anchor plate (6) radially open to the outside, that the rear anchor plate (8) is held longitudinally displaceable and rotationally secured on holding members (15) protruding axially parallel on the magnetic part (11) and that the compression springs (9, 10) are disposed with one part in the inner pole (12) and with a further part in the outer pole (13) of the magnetic part (11).

2. Spring-applied brake according to claim 1,
**characterised in that**
the front anchor plate (6) has a diameter which is the same size as or larger than the diameter of the brake rotor (2).

3. Spring-applied brake according to claim 1 or 2,
**characterised in that**
the ring-shaped anchor plate (8) is rectangular or square in cross-section and the outline of the recess (7) in the front anchor plate (6) is adapted thereto.

4. Spring-applied brake according to one of claims 1 to 3,
**characterised in that**
the front anchor plate (6) and the rear anchor plate (8) have the same external diameter.

5. Spring-applied brake according to one of claims 1 to 4,
**characterised in that**
the front anchor plate (6) is disposed with its edge section (19) which engages radially over the rear anchor plate (8) likewise with corresponding openings on the holding members (15) on the magnetic part (11) but has a greater play relative to these holding members (15) than the rear anchor plate (8).

6. Spring-applied brake according to one of claims 1 to 5,
**characterised in that**
the holding members (15) on the magnetic part (11) have smooth cylindrical faces (16) on which is mounted at least the rear anchor plate (6) with corresponding cylinder holes.

7. Spring-applied brake according to one of claims 1 to 6,
**characterised in that**
followers (17) protruding axially parallel are let into one of the two anchor plates (6,8) so that each other anchor plate (8, 6) with corresponding guide holes is mounted axially displaceable thereon.

8. Spring-applied brake according to claim 7,
**characterised in that**
the followers (17) of the relevant anchor plate (6, 8) and correspondingly the guide holes of the other anchor plate (8, 6) are cylindrical.

9. Spring-applied brake according to one of claims 1 to 8,
**characterised in that**
the force ratio of the compression springs (9) which bias the front anchor plate (6) and of the compression springs (10) which bias the rear anchor plate (8) is greater than 50 : 50.

## Revendications

1. Frein à ressort à desserrage électromagnétique avec rotor de frein (2) qui, solidaire en rotation avec un arbre ou un moyen (1) à freiner, mais cependant mobile sur celui-ci, dans le sens axial, est disposé entre une butée (4) fixée au châssis, et deux rondelles d'induits (6, 8) coaxiales avec lui et influencées en direction dudit rotor de frein (2) par plusieurs ressorts de pression (9, 10), lesquelles sont divisées en une rondelle d'induit (6) antérieure, influençant exclusivement le rotor de frein (2) dans la position de freinage, et en une rondelle d'induit postérieure (8), sur le côté de la rondelle d'induit antérieure (6) opposé au rotor de frein (2), et peuvent, en outre, être attirées, vers la pièce magnétique (11), à l'encontre de la force des ressorts de pression (9, 10), par leurs côtés opposés au rotor (2), en libérant celui-ci, avec un pôle extérieur (13) coaxial avec les rondelles d'induits ainsi qu'avec un pôle intérieur (12) qui lui est concentrique, en passant par un entrefer, et la rondelle d'induit antérieure (6) étant disposée, solidaire en rotation ainsi que mobile dans le sens axial, sur la rondelle d'induit postérieure,
**caractérisé en ce que**
chacune des deux rondelles d'induits (6, 8) est disposée face à une surface polaire opposée, correspondante de l'un des deux pôles (12, 13) de la pièce magnétique, avec intercalation de l'entrefer.

2. Frein à ressort selon la revendication 1,
**caractérisé en ce que**
la rondelle d'induit antérieure (6) présente un diamètre qui est égal ou supérieur au diamètre du rotor de frein (2).

3. Frein à ressort selon la revendication 1 ou 2,
**caractérisé en ce que**
la rondelle d'induit en forme d'anneau (8) présente une section transversale rectangulaire ou carrée et que le contour de l'évidement (7) de la rondelle d'induit antérieure (6) y est adaptée.

4. Frein à ressort selon l'une des revendications 1 à 3,
**caractérisé en ce que**
la rondelle d'induit antérieure (6) et la rondelle d'induit postérieure (8) ont le même diamètre extérieur.

5. Frein à ressort selon l'une des revendications 1 à 4,
**caractérisé en ce que**
la rondelle d'induit antérieure (6), avec son secteur marginal (19) qui recouvre la rondelle d'induit postérieure (8) dans le sens radial, est également disposée, avec des orifices correspondants, sur les organes de retenue (15) à la pièce magnétique (11), mais présente cependant, par rapport à ces organes de retenue (15), un plus grand jeu que la rondelle d'induit postérieure (8).

6. Frein à ressort selon l'une des revendications 1 à 5,
**caractérisé en ce que**
les organes de retenue (15) à la pièce magnétique (11) présentent des surfaces cylindriques lisses (16) sur lesquelles la rondelle d'induit postérieure (6), au moins, est disposée avec des trous cylindriques correspondants.

7. Frein à ressort selon l'une des revendications 1 à 6,
**caractérisé en ce que**
dans l'une des deux rondelles d'induits (6, 8) des entraîneurs (17) sont insérés en saillie, à axe parallèle, entraîneurs sur chacun desquels l'autre rondelle d'induit (8, 6) est respectivement montée, mobile dans le sens axial, avec des trous de guidage correspondants.

8. Frein à ressort selon la revendication 7,
**caractérisé en ce que**
les entraîneurs (17) de la rondelle d'induit (6, 8) concernée et, adéquatement, les trous de guidage de l'autre rondelle d'induit (8, 6) sont cylindriques.

9. Frein à ressort selon l'une des revendications 1 à 8,
**caractérisé en ce que**
le rapport de force des ressorts de pression (9) agissant sur la rondelle d'induit antérieure (6) et des ressorts de pression (10) agissant sur la rondelle d'induit postérieure (8) est supérieur à 50 : 50.
